# EUROPÄISCHE PATENTSCHRIFT

(11) **EP 2 737 228 B1**
(45) Veröffentlichungstag und Bekanntmachung des Hinweises auf die Patenterteilung: **12.04.2017**
(21) Anmeldenummer: 12750523.8
(22) Anmeldetag: 27.07.2012
(51) Int. Cl.: F16F 15/02, F16F 15/22

(54) **VORRICHTUNG SOWIE SATZ VON VORRICHTUNGEN ZUR KONTROLLE MECHANISCHER SCHWINGUNGEN**
DEVICE AND SET OF DEVICES FOR MONITORING MECHANICAL OSCILLATIONS
DISPOSITIF, AINSI QU'ENSEMBLE DE DISPOSITIFS, POUR LE CONTRÔLE DE VIBRATIONS MÉCANIQUES

(30) Priorität: 30.07.2011 DE 102011109070
(43) Veröffentlichungstag der Anmeldung: 04.06.2014
(73) Patentinhaber: TuTech Innovation GmbH, 21079 Hamburg (DE); Technische Universität Hamburg-Harburg, 21073 Hamburg (DE)
(72) Erfinder: STAROSSEK, Uwe, 21075 Hamburg (DE); SCHELLER, Jörn, 01069 Dresden (DE)
(74) Vertreter: Hauck Patentanwaltspartnerschaft mbB
(86) Internationale Anmeldenummer: PCT/EP2012/003198
(87) Internationale Veröffentlichungsnummer: WO 2013/017244

(56) Entgegenhaltungen:
- EP-A1- 0 505 976
- DE-B4-102006 059 189
- FR-A1- 2 845 744

## Beschreibung

Die vorliegende Erfindung betrifft eine Vorrichtung zur effizienten Kontrolle mechanischer Schwingungen ebenso wie einen Satz solcher Vorrichtungen.

Baukonstruktionen, Land-, Wasser-, Luft- und Raumfahrzeuge sowie sonstige Maschinen, Geräte und Anlagen, im Folgenden allgemein als Konstruktionen bezeichnet, können durch dynamisch einwirkende Kräfte zu Schwingungen angeregt werden, die die Gebrauchsfähigkeit, die Dauerhaftigkeit und die Stand- oder Betriebssicherheit beeinträchtigen. Die Möglichkeit und die Auswirkungen derartiger Schwingungen sind beim Konstruktionsentwurf zu untersuchen. Die Schwingungen sind erforderlichenfalls durch geeignete Maßnahmen zu unterdrücken oder zu begrenzen. Eine mögliche Maßnahme ist die Versteifung der Konstruktion, was allerdings einen erhöhten Materialbedarf, höheres Gewicht und höhere Kosten bedingt.

Eine sinnvolle und wirtschaftliche Alternative können passive oder aktive Kontrollsysteme sein, die zusätzliche, den Schwingungen entgegenwirkende Kräfte in die Konstruktion einleiten und deren Schwingungsbeeinträchtigung damit reduzieren. Im Falle der sogenannten passiven mechanischen Dämpfer resultieren die zusätzlichen Kräfte aus federnd an der Konstruktion befestigten Hilfsmassen. Meist sind zusätzlich dämpfende Elemente vorhanden. Bei aktiven mechanischen Dämpfern hingegen werden die zusätzlichen Kräfte durch die Verschiebung oder Beschleunigung von Hilfsmassen mittels Antrieben - auch als Aktuatoren bezeichnet - erzeugt. Bei diesem gezielten Regeleingriff sind Verschiebung oder Beschleunigung der Hilfsmasse Stellgrößen, die in Abhängigkeit der Systemparameter und der gemessenen Bewegung der Konstruktion und eventuell der gemessenen Umgebungsbedingungen zu berechnen und einzustellen sind (Regelkreis).

Die Anforderungen an Kontrollsysteme zur Schwingungskontrolle sind vielfältig und in den Entwurfskonsequenzen teilweise gegenläufig. Einerseits sollen die vom Kontrollsystem erzeugten Kraftgrößen möglichst beliebig zeitlich und räumlich einstellbar sein. Andererseits sollte das Konstruktionsprinzip im Interesse hoher Betriebssicherheit und geringer Erstellungskosten ein möglichst einfaches sein. Aktive mechanische Dämpfer erfüllen die erstgenannte Anforderung allgemein besser als die passiven mechanischen Dämpfer, wohingegen die passiven mechanischen Dämpfer Vorteile hinsichtlich der zweiten Anforderung haben. Weitere Kriterien für die aktiven Dämpfer sind eine hohe Robustheit des Regelkreises und ein möglichst geringer Leistungs- und Energiebedarf der Antriebe.

Anwendungen im Bereich von Baukonstruktionen sind beispielsweise in Housner, G. W.; Bergmann, L. A.; Caughey, T. K.; Chassiakos, A. G.; Claus, R. O.; Masri, S. F.; Skelton, R. E.; Soong, T. T.; Spencer, B. F.; Yao, J. T. P. "Structural Control: Past, Present, and Future." Journal of Engineering Mechanics, 9 (123), 1997, 897-971 beschrieben.

Aus DE 10 2004 025 761 A1 ist eine Vorrichtung zur Dämpfung einer Flatterbewegung bei einem Tragwerk bekannt, die ein Paar schwenkbar gelagerter Massenkörper aufweist, die auf gegenüberliegenden Seiten einer Achse angeordnet sind. Ein Antrieb verstellt die Massenkörper um einen vorbestimmten Winkel in einer Ebene senkrecht zu der Achse nach Maßgabe einer Steuereinheit, die auf gemessene Werte der Tragwerksposition und/oder -bewegung reagiert. Die Schwenkbewegung ist dabei auf einen bestimmten Winkelbereich beschränkt. Die Verstellung der Massenkörper ist mit einem periodischen Anheben selbiger verbunden.

Aus DE 10 2004 045 433 ist eine Dämpfervorrichtung zur Dämpfung einer Schwingungsbewegung bekannt, bei der ein Paar von Massenkörpern an den beiden Enden eines drehbar gelagerten Balkens befestigt und auf gegenüberliegenden Seiten einer Dreh- oder Schwingungsachse des Balkens angeordnet ist, wobei die Dreh- oder Schwingungsbewegung des Balkens aktiv von einem Aktuator oder passiv mittels Feder- und/oder Dämpferelementen vorgegeben oder beeinflusst werden kann. In der aktiven Ausgestaltung wird der Aktuator genutzt, um den Balken anzutreiben und zu beschleunigen.

Aus DE 10 2006 059 189 B4, das als nächstliegenden Stand der Technik betrachtet ist, ist eine Vorrichtung zur Dämpfung einer Schwingungsbewegung bekannt, bei der die Kontrollkräfte mittels rotierender Massenkörper generiert werden. Dabei ist kontinuierlich eine Geschwindigkeit vorzugeben, die auch konstant sein kann. Bei der Anwendung der Vorrichtung zur Kontrolle von Vertikalschwingungen müssen die Massenkörper vom Antrieb wiederholt angehoben werden.

Aus JP 20 96 064 A ist zur Vibrationsdämpfung bei hohen Konstruktionen eine Dämpfungsvorrichtung vorgesehen, die zwei um parallele Achsen rotierenden Massenkörper aufweist, die um parallel zueinander angeordnete Rotationsachsen mit einer Frequenz rotieren, die ein Drehmoment mit einer Frequenz erzeugt, das der Eigenfrequenz der zu dämpfenden Konstruktion entspricht.

Aus JP 61 47 258 A ist eine Schwingungsdämpfung bekannt, bei der in einem ringförmigen, stehenden Zahnkranz mit einer innenliegenden Verzahnung ein zweites ringförmiges Element mit einer Außenverzahnung kämmend umläuft, wobei der Durchmesser des Innenrings dem Radius des Außenrings entspricht. Durch das Zusammenspiel der beiden Ringe kann ein Gewicht zur Schwingungsdämpfung vertikal bewegt werden.

Aus JP 2000 120 764 A ist ein Dämpfungssystem bekannt, bei dem zur Schwingungserzeugung zwei scheibenförmige Rotationskörper drehfest auf einer federnd gelagerten Rundplatte angeordnet sind. Zwei exzentrische Massenkörper bewegen sich innerhalb der Grundplatte.

Aus EP 1 493 941 A1 ist ein Schwingungsdämpfer bekannt geworden, bei der zur Schwingungsdämpfung ein Schwingungsgenerator eine Gegenfrequenz erzeugt, die kleiner als die zu dämpfende Eigenschwingung ist.

Aus FR 2 845 744 ist eine Schwingungsdämpfung für ein Fahrzeug bekannt, bei der jeweils ein Paar von Schwingungsdämpfern mit parallel zueinander verlaufenden Rotationsachsen durch einen Motor angetrieben werden. Durch die Geschwindigkeit des Motors kann die Schwingungsfrequenz eingestellt werden.

Der Erfindung liegt die Aufgabe zugrunde, eine Vorrichtung zur Kontrolle von Schwingungen bereitzustellen, bei der ein möglichst geringer Leistungs- und Energiebedarf bei einer kompakten Bauweise des Antriebs zur Kontrolle der Schwingung genügt.
Erfindungsgemäß wird die Aufgabe durch eine Vorrichtung zur Schwingungskontrolle einer Konstruktion mit den Merkmalen aus Anspruch 1 gelöst. Vorteilhafte Ausgestaltungen bilden den Gegenstand der Unteransprüche.

Die erfindungsgemäße Vorrichtung ist bestimmt und ausgelegt zur Schwingungskontrolle an einer Konstruktion. Als Konstruktion werden nachfolgend Bau- und Tragwerke, Land-, Wasser-, Luft- und Raumfahrzeug sowie sonstige Maschinen, Geräte und Anlagen aufgefasst, die durch einwirkende Kräfte zu Schwingungen angeregt werden können. Die erfindungsgemäße Vorrichtung weist einen Massenkörper auf, der drehbar um eine Rotationsachse gelagert und dessen Schwerpunkt einen Abstand von der Rotationsachse besitzt. Die erfindungsgemäße Vorrichtung weist ferner eine Steuerung auf, die Sensorsignale von zwei Sensoren verarbeitet. Ein erster Sensor erfasst in einem vorbestimmten Winkelbereich einer Rotationsbewegung des Massenkörpers um seine Rotationsachse einen Istwert für die Winkelgeschwindigkeit und/oder für eine Winkelbeschleunigung des Massenkörpers. Der zweite Sensor erfasst eine Kenngröße für eine Schwingung der Konstruktion. Die Steuerung ermittelt aus den erfassten Werten des ersten und des zweiten Sensors einen Sollwert für eine Geschwindigkeit und/oder Beschleunigung des Massenkörpers in dem vorbestimmten Winkelbereich. Ferner ist die erfindungsgemäße Vorrichtung mit einem Antrieb ausgestattet, der entsprechend dem oder den Sollwerten der Regelung in dem vorbestimmten Winkelbereich die Rotationsbewegung des Massenkörpers antreibt. Die Steuerung der Rotationsbewegung der erfindungsgemäßen Vorrichtung bezieht sich stets auf einen vorbestimmten Winkelbereich. Bevorzugt kann ein Antrieb des Massenkörpers außerhalb des vorbestimmten Winkelbereichs entfallen, so dass der Massenkörper sich außerhalb des vorbestimmten Winkelbereichs frei bewegt und seine Lageenergie damit, zur späteren Nutzung zum Wiederanheben des Massekörpers, in Bewegungsenergie umgewandelt werden kann. Die Erfindung beruht auf der Erkenntnis, dass der Antrieb - im Gegensatz zu bekannten aktiven mechanischen Schwingungsdämpfern - nicht zum Anheben des Massekörpers eingesetzt wird. Die notwendige Energie zum Anheben des Massekörpers wird stattdessen aus der Bewegungsenergie des Massekörpers bezogen, die zuvor in einer Fallbewegung gewonnen wurde. Hierdurch wird die Möglichkeit geschaffen, den Antrieb kompakt auszulegen. Die erfindungsgemäße Vorrichtung arbeitet nach dem Prinzip eines Freifallrotors, bei dem außerhalb des vorbestimmten Winkelbereichs die Bewegung des Massenkörpers im Wesentlichen frei und nicht angetrieben erfolgt. Lediglich in dem vorbestimmten Winkelbereich greift der Antrieb in die Bewegung des Massenkörpers ein und sorgt somit für die zur Schwingungsdämpfung erforderliche Rotationsbewegung.

In einer weiteren Ausgestaltung schließt die Rotationsachse gegenüber der Horizontalen einen Winkel α ein, der von 0° verschieden ist. Horizontal ist hierbei die Richtung quer zur Richtung der Schwerkraft.

In einer bevorzugten Ausgestaltung ist der vorbestimmte Winkelbereich des Massenkörpers, in dem der Antrieb in die Bewegung des Massenkörpers eingreift und in dem der erste Sensor die Winkelgeschwindigkeit und/oder Winkelbeschleunigung des Massenkörpers erfasst, ein Winkelbereich, in dem der Schwerpunkt des Massenkörpers angehoben ist. Bevorzugt weist der vorbestimmte Winkelbereich eine Winkellage des Massenkörpers auf, in der die Lageenergie des Massenkörpers maximal ist. Bezogen auf die Bewegung des Massenkörpers in dem Schwerefeld bedeutet dies, dass der vorbestimmte Winkelbereich, in dem der Antrieb in die Bewegung des Massenkörpers eingreift, mindestens die höchste Lage des Massenkörpers umfasst. In dieser Position ist die Lageenergie des Massenkörpers maximal und seine Bewegungsenergie minimal. Es wird also in die Bewegung des Massenkörpers eingegriffen, wenn dieser seine geringste Geschwindigkeit und somit Bewegungsenergie besitzt, wodurch Motorleistung und Motordrehmoment für den Eingriff in die Bewegung reduziert werden.

In einer bevorzugten Ausgestaltung erfasst der zweite Sensor eine Schwingungsbewegung der zu dämpfenden Konstruktion. Die gemessenen Sensorsignale dienen der Steuerung zur Ermittlung des Eingriffs in die Bewegung des Massekörpers.

In einer alternativen oder zusätzlichen Ausgestaltung kann der zweite Sensor eine Umgebungsbedingung erfassen, die eine Schwingung der Konstruktion auslösen kann. Dies bedeutet, es wird aufgrund von Veränderungen in den Umgebungsbedingungen über die Steuerung in die Bewegung des Massenkörpers eingegriffen. Beide Ausgestaltungen von zwei Sensoren sind miteinander kombinierbar, so dass die Steuerung beispielsweise sowohl aufgrund von Änderungen in den Umgebungsbedingungen in die Bewegung des Massenkörpers eingreift als auch aufgrund von tatsächlich vorhandenen Schwingungen der Konstruktion.

In einer weiteren bevorzugten Ausgestaltung der erfindungsgemäßen Vorrichtung ist die Rotationsachse in ihrer Lage im Raum einstellbar. Hierdurch können die Umlaufzeit des Massenkörpers und damit der zeitliche Verlauf und die Parameter (Amplitude, Frequenz) der erzeugten Kontrollkraft gezielt beeinflusst werden. In einer besonders bevorzugten Ausgestaltung ermittelt die Steuerung einen Sollwert zu der Lage der Rotationsachse im Raum und stellt über einen zweiten Antrieb die Lage der Rotationsachse im Raum entsprechend ein. Neben der Beeinflussung der Kontrollkraft kann durch die Anpassung der Lage der Rotationsachse im Raum auf sich verändernde Schwingungszustände der Konstruktion reagiert und diese ausgeglichen werden.

In einer weiteren bevorzugten Ausgestaltung kann der Abstand des Schwerpunkts des Massenkörpers von der Rotationsachse eingestellt werden. Der einstellbare Abstand des Massenschwerpunkts von der Rotationsachse erlaubt es, die durch den Massenkörper und seine Bewegung erzeugten Kräfte und Momente an die zu dämpfende Konstruktion anzupassen.

In einer bevorzugten Weiterbildung bestimmt die Steuerung einen Sollwert für den Abstand des Schwerpunkts des Massenkörpers von der Rotationsachse und stellt diesen über einen weiteren Abstandsantrieb an dem Rotationskörper ein. Auf diese Weise kann die Steuerung die erzeugten Kräfte während des Dämpfungsvorgangs anpassen.

Bevorzugt können an einer Konstruktion auch mehrere Vorrichtungen gemeinsam als ein Satz von Vorrichtungen eingesetzt werden, wobei bevorzugt die Rotationsachsen der Vorrichtungen parallel zueinander angeordnet sind.

Bei der Verwendung von mehreren Vorrichtungen zur Schwingungsdämpfung erfolgt die Rotationsbewegung der Massenkörper bevorzugt gleichphasig und gegensinnig. Durch die Kombination beispielsweise von zwei Vorrichtung werden die konstruktionsbedingt auftretenden Horizontalkräfte und Drehmomente kompensiert und ausschließlich eine vertikal wirkende Kraft zur Schwingungskontrolle generiert, wenn die Rotationsachsen horizontal ausgerichtet sind. Besitzt die Rotationsachse eine von der horizontalen abweichende Orientierung im Raum (α ≠ 0), so wird eine gemeinsam, orthogonal zu der durch die beiden Rotationsachsen aufgespannte Ebene wirkende Kraft zur Schwingungskontrolle generiert.

In einer bevorzugten Ausgestaltung fallen bei mehreren Vorrichtungen die Rotationsachsen zusammen. Diese Anordnung der Rotationsachsen erlaubt eine besonders kompakte Bauweise. Die zur Schwingungskontrolle generierte Kraft wirkt dabei orthogonal zur gemeinsamen Rotationsachse und in der vertikalen Ebene, die diese Rotationsachse enthält.

In einer weiteren bevorzugten Ausgestaltung sind die Rotationsachsen der Vorrichtungen in vertikaler Richtung übereinander angeordnet.

Neben der parallelen Anordnung der Rotationsachse ist es auch möglich, die Rotationsachsen der Vorrichtungen derart im Raum zu orientieren, dass diese einen gleich großen und entgegengesetzt orientierten Winkel im Raum mit der Horizontalen einschließen. Die Rotationsachsen von beispielsweise von zwei Vorrichtungen schließen gegenüber einer horizontalen Ebene gleich große, aber entgegengesetzte Winkel α ein und die vertikalen Projektionen beider Rotationsachsen auf eine horizontale Ebene verlaufen parallel bzw. fallen zusammen. Auf diese Weise können die generierten aber unerwünschten Horizontalkräfte in Richtung der horizontalen Richtungskomponente der Rotationsachse kompensiert werden.

Bei der Verwendung eines Satzes von mehreren erfindungsgemäßen Vorrichtungen kann vorgesehen sein, eine mechanische Kopplung zwischen den Massenkörpern oder deren Rotationswellen vorzusehen, die deren Rotationsbewegung eine feste Phasenlage zuordnet. Durch diese Ausgestaltung wird für die Steuerung eine Kontrolle der Phasenbeziehungen zwischen den Massenkörpern vereinfacht.

Die erfindungsgemäße Vorrichtung wird nachfolgend an einem Ausführungsbeispiel näher erläutert. Es zeigt:
- Fig. 1: eine schematische Ansicht mit den erfindungsgemäßen Komponenten der Vorrichtung,
- Fig. 2: eine räumliche Darstellung der erfindungsgemäßen Vorrichtung mit ihren Einflussgrößen zur Schwingungskontrolle und
- Fig. 3: zeigt einen Satz von vier Vorrichtungen zur Schwingungskontrolle in einer räumlichen Darstellung sowie einer Front- und Seitenansicht.

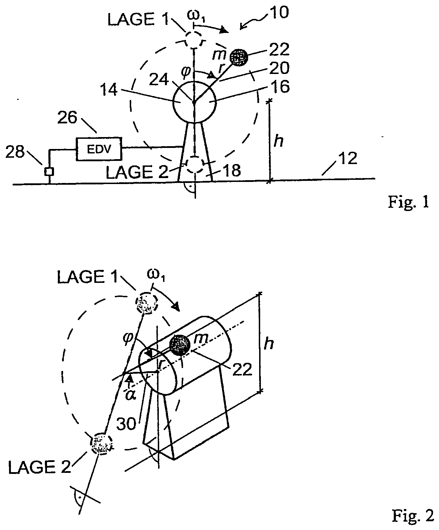

Fig. 1 zeigt die erfindungsgemäße Vorrichtung zur Schwingungskontrolle 10 an einer Konstruktion 12. Die Konstruktion 12 ist stark schematisch dargestellt, hierbei kann es sich um eine beliebige Baukonstruktion, ein Fahrzeug oder eine sonstige schwingungsfähige Maschine handeln. Die erfindungsgemäße Vorrichtung besitzt einen Träger 14, der in einem Trägerkopf 16 einen Antrieb (nicht dargestellt) aufweist. Der Trägerkopf 16 wird durch einen mit der Konstruktion 12 verbundenen Trägerständer 18 getragen. Am Trägerkopf 16 ist über eine Abstandsstange 20 ein Massenkörper 22 zu erkennen. Die Abstandsstange 20 ist drehbar an dem Trägerkopf 16 bzw. einer entsprechenden Rotorwelle (nicht dargestellt) befestigt. Das Rotationszentrum 24 für den Massenkörper 22 besitzt eine Höhe h, über die an der Rotationswelle angreifende Kräfte und Momente auf die Konstruktion übertragen werden. Der Massenkörper 22 besitzt in Fig. 1 eine angehobene Position (Lage 1) und eine alternative Position (Lage 2). Der Massenkörper 22 bildet über die Abstandsstange 20 mit dem Abstand r zu der Rotationsachse eine Unwucht. Durch die vorhandene Winkelgeschwindigkeit ω₁ in der Lage 1 des Massenkörpers wird eine Rotationsbewegung initiiert. Der Massenkörper 22 bewegt sich antriebslos durch die Wirkung der Schwerkraft in die Lage 2 und vollführt eine freie Bewegung im Schwerefeld, die auf einer Kreisbahn geführt ist. Die Winkelgeschwindigkeit des Massenkörpers ist in der Lage 2 maximal und nimmt bis zum Erreichen der Lage 1 ab. Die potentielle Energie der Lage 1 verwandelt sich folglich in kinetische Energie, die sich wieder zurück in potentielle Energie verwandelt.

Nach einem Umlauf des Massenkörpers 22 wird die Geschwindigkeit in der Lage 1 im Allgemeinen nicht genau mit der Geschwindigkeit zu Beginn des Umlaufs übereinstimmen. Gründe hierfür sind zum einen die Verluste, beispielsweise durch Reibung zwischen sich relativ zueinander bewegenden Teilen der Vorrichtung und zum anderen die Energieübertragung zwischen der schwingenden Konstruktion 12 und der Vorrichtung zur Schwingungskontrolle. Es sei angemerkt, dass bei wirksamer Schwingungsdämpfung Energie von der zu dämpfenden Konstruktion in die Vorrichtung eingetragen wird, welche die Rotationsgeschwindigkeit des Massenkörpers erhöht.

Zur Aufrechterhaltung einer kontinuierlichen Schwingungskontrolle wird die Geschwindigkeit im Bereich der Lage 1 gesteuert. Die Geschwindigkeit muss mindestens so groß sein, dass der Körper nach einer Umdrehung die Lage 1 wieder erreicht und somit eine umlaufende Bewegung sichergestellt ist. Die sich so ergebende freie Bewegung, d. h. eine Rotation mit einer nicht kontinuierlich vorgegebenen Geschwindigkeit ist charakteristisch für die Vorrichtung zu Schwingungskontrolle.

Die Antriebsleistung für die Steuerung der Geschwindigkeit in der Lage 1 ist deutlich geringer als die Leistung, die für ein Anheben des Massenkörpers notwendig wäre. Der erforderliche Antrieb ist somit hinsichtlich Größe und Leistungsbedarf bedeutend kleiner als bei bekannten Vorrichtungen zur Schwingungskontrolle.

Der Massenkörper erzeugt aufgrund der Zentrifugalbeschleunigung eine zeitlich veränderliche Kraft auf seine Rotationsachse, die zur Schwingungskontrolle benutzt wird. Er benötigt für einen vollständigen Umlauf, also von der Rotationsbewegung aus der Lage 1 bis zum Wiedererreichen dieser, eine bestimmte Umlaufzeit. Diese und die zeitlich veränderliche Kraft sind von den weiteren Parametern der Vorrichtung, wie beispielsweise dem Abstand des Massenschwerpunkts oder der Masse, abhängig.

Die Steuerung des Antriebs erfolgt über eine Steuerung 26, die in Fig. 1 schematisch dargestellt ist. Die Eingangsgröße für die Steuerung 26 bildet einen Sensor 28, der in dem dargestellten Ausführungsbeispiel eine Schwingung der Konstruktion 12 erfasst.

Fig. 2 zeigt die Vorrichtung 10 in einer perspektivischen Ansicht, wobei die Rotationswelle 30 um den Winkel α aus der Horizontalen (strichpunktiert dargestellt) geneigt ist. Der Massenkörper 22 beschreibt weiterhin eine Kreisbewegung, allerdings ist die Ebene der Kreisbewegung um den Winkel α gegenüber einer horizontalen Ebene geneigt.

Die von der Vorrichtung zur Schwingungskontrolle in Fig. 2 erzeugte Kraft hängt von den folgenden Parametern ab: Winkelgeschwindigkeit ω₁ in der Lage 1, die Größe der Masse m, der Abstand r des Massenschwerpunkts von der Rotationsachse sowie von dem Winkel α, um den die Rotationsachse gegenüber der horizontalen Lage geneigt ist. Ferner geht als Parameter die vertikale Höhe h des Drehzentrums des Massenkörpers gegenüber der Konstruktion 12 ein.

Durch die erfindungsgemäß vorgesehene Steuerung der Geschwindigkeit in der Lage 1 wird eine gezielte Beeinflussung der generierten Kraftgrößen und der resultierenden Umlaufzeit erreicht, um die Schwingung einer mit der Vorrichtung verbundenen Konstruktion zu kontrollieren und insbesondere diese zu dämpfen. Durch eine geeignete Steuerung kann sowohl ein in Richtung der Rotationsachse wirkendes Drehmoment als auch eine senkrecht zur Richtung der Rotationsachse wirkende Kraft erzeugt werden. Der zeitliche Verlauf der Rotationsgeschwindigkeit ist abhängig von den genannten Einflussgrößen und im Allgemeinen nicht konstant. Der Zeitverlauf der Moment-Kraftwirkung ist vom Verlauf der Rotationsgeschwindigkeit und von den genannten Einflussgrößen abhängig und wird durch die Steuerung 26 beeinflusst.

Der Sensor 28, der als zweiter Sensor für die Steuerung 26 ausgebildet ist, kann statt der Schwingungen der Konstruktion 12 auch Umgebungsbedingungen erfassen, die die Schwingungen der Konstruktion auslösen. Dabei kann es sich beispielsweise um eine Windgeschwindigkeit oder eine Beschleunigung des Bodens, etwa bei einem Erdbeben, handeln. Es können auch mehrere zweite Sensoren vorgesehen sein, die gegebenenfalls unterschiedliche Umgebungsbedingungen erfassen. Eine Berücksichtigung derartiger Umgebungsbedingungen durch die Steuerung 26 führt zu einem effektiven Einsatz der Vorrichtung im Betrieb.

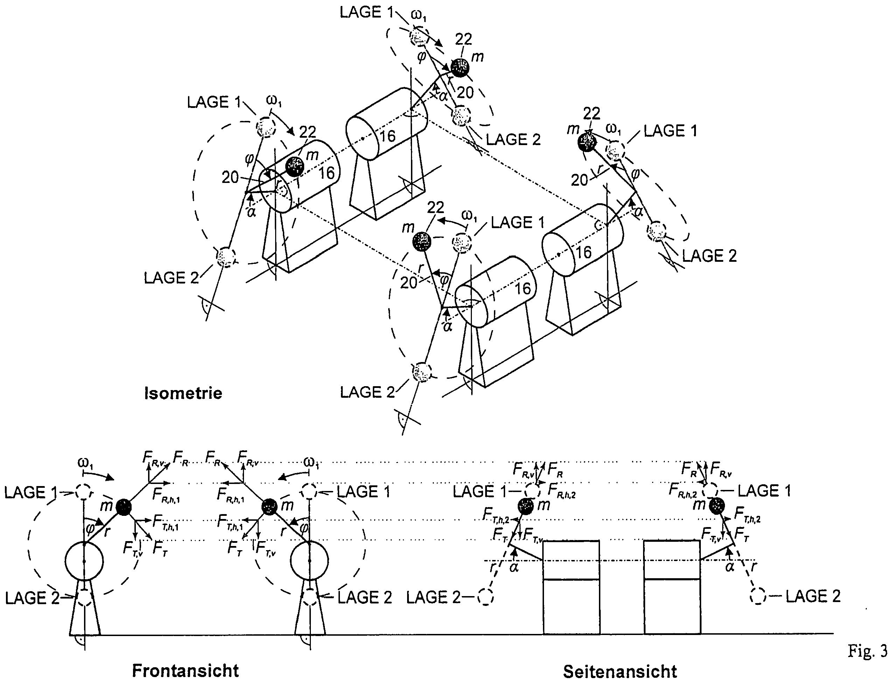

Fig. 3 zeigt eine räumliche Darstellung sowie eine Front- und Seitenansicht einer beispielhaften Anordnung von vier erfindungsgemäßen Vorrichtungen, die derartig angeordnet sind, dass eine gemeinsame veränderbare Vertikalkraft generiert und sämtliche Horizontalkräfte vermieden werden.

Die Ausführung der Fig. 3 besteht aus vier baugleichen Vorrichtungen 10 gemäß Fig. 2, deren parallel ausgerichtete Trägerköpfe 16 in einer gemeinsamen horizontalen Ebene liegen. Die vier Trägerköpfe 16 sind paarweise zueinander angeordnet, wobei die jeweiligen Massenkörper sich auf den voneinander fortweisenden Seiten der Trägerköpfe befinden und die Achsen zweier Trägerköpfe zusammenfallen. Zudem sind die Paare von Trägerköpfen 16 derart aufgestellt, dass ihre Achsen parallel verlaufen und die Rotationsebenen der Massenkörper für beide Paare zusammenfallen.

In den Paaren von Vorrichtungen rotieren die Massekörper 22 gleichphasig und gegensinnig. Außerdem ist die Drehbewegung der Paare synchron. Der Drehwinkel ϕ aller Massekörper ist jederzeit gleich groß. Zu einem Zeitpunkt befinden sich die Massekörper aller Vorrichtung in ihren Lagen 1. Die Steuerung gibt zu diesem Zeitpunkt jeder Vorrichtung eine identische Geschwindigkeit ω₁ vor. Die Rotationswellen der Vorrichtungen, deren Trägerköpfe auf einer gemeinsamen Achse liegen, weisen gleiche, jedoch entgegengesetzt gerichtete Winkel α auf.

In jeder Vorrichtung 10 wird aufgrund der Rotation des Massekörpers eine Radialkraft *F_{R}* in Richtung der Abstandsstange 20 sowie eine Tangentialkraft *F_{T}* senkrecht zu dieser in der Rotationsebene des Massekörpers generiert. Die senkrechten Richtungskomponenten *F_{R,v}* und *F_{T,v}* beider Kräfte überlagern sich zu der resultierenden Vertikalkraft einer Vorrichtung. Durch Veränderung des Winkels α ist die Größe und der zeitliche Verlauf dieser resultierenden Vertikalkraft beeinflussbar. Die resultierende Vertikalkraft, die durch die vier Vorrichtungen gemeinsam erzeugt wird, hat die vierfache Größe. Durch die in Fig.3 gewählte Aufstellung der erfindungsgemäßen Vorrichtungen kompensieren sich sämtliche horizontalen Richtungskomponenten *F_{R,h,1}*, *F_{R,h,2}*, *F_{T,h,1}* und *F_{T,h,2}* der generierten Kräfte, so dass lediglich eine resultierende Vertikalkraft mit veränderbarer Amplitude und zeitlichem Verlauf gemeinsam generiert wird.

## Patentansprüche

1. Vorrichtung zur Schwingungskontrolle einer Konstruktion, mit
- einem Massenkörper (22), der drehbar um eine Rotationsachse gelagert und dessen Schwerpunkt einen Abstand (r) von der Rotationsachse **dadurch gekennzeichnet, dass** die Vorrichtung weiter die folgenden Merkmale aufweist:
- eine Steuerung (26) mit einem ersten Sensor, der in einem vorbestimmten Winkelbereich einer Rotationsbewegung des Massenkörpers (22) um die Rotationsachse einen Istwert für eine Winkelgeschwindigkeit (ω) und/oder für eine Winkelbeschleunigung des Massenkörpers (22) erfasst, und einem zweiten Sensor, der eine Kenngröße für eine Schwingung der Konstruktion erfasst, wobei die Regelung aus den erfassten Werten des ersten und zweiten Sensors einen Sollwert für die Geschwindigkeit und/oder Beschleunigung des Massenkörpers in dem vorbestimmten Winkelbereich ermittelt,
- und einen Antrieb, der entsprechend dem oder den Sollwerten der Steuerung in dem vorbestimmten Winkelbereich die Rotationsbewegung des Massenkörpers (22) antreibt und außerhalb des Winkelbereichs antriebslos ist.

2. Vorrichtung nach Anspruch 1, **dadurch gekennzeichnet, dass** ein Antrieb des Massenkörpers (22) ausschließlich in dem vorbestimmten Winkelbereich der Rotationsbewegung des Massenkörpers (22) erfolgt.

3. Vorrichtung nach Anspruch 1 oder 2, **dadurch gekennzeichnet, dass** die Rotationsachse (24) horizontal liegt.

4. Vorrichtung nach Anspruch 1 oder 2, **dadurch gekennzeichnet, dass** die Rotationsachse (24) gegenüber der Horizontalen einen Winkel α einschließt, der von 0° verschieden ist.

5. Vorrichtung nach einem der Ansprüche 1 bis 4, **dadurch gekennzeichnet, dass** der vorbestimmte Winkelbereich des Massenkörpers ein Winkelbereich ist, in dem der Schwerpunkt des Massenkörpers angehoben ist.

6. Vorrichtung nach Anspruch 5, **dadurch gekennzeichnet, dass** der vorbestimmte Winkelbereich die Winkellage aufweist, in der die potentielle Energie des Massenkörpers maximal ist.

7. Vorrichtung nach einem der Ansprüche 1 bis 6, **dadurch gekennzeichnet, dass** der zweite Sensor eine Umgebungsbedingung erfasst, die eine Schwingung der Konstruktion auslöst.

8. Vorrichtung nach einem der Ansprüche 1 bis 7, **dadurch gekennzeichnet, dass** der zweite Sensor eine Schwingung der Konstruktion (12) erfasst.

9. Vorrichtung nach einem der Ansprüche 1 bis 8, **dadurch gekennzeichnet, dass** die Rotationsachse in ihrer Lage im Raum einstellbar ist.

10. Vorrichtung nach Anspruch 9, **dadurch gekennzeichnet, dass** die Regelung einen Sollwert zur Lage der Rotationsachse im Raum ermittelt und ein weitere Antrieb die Lage der Rotationsachse entsprechend dem Sollwert einstellt.

11. Vorrichtung nach einem der Ansprüche 1 bis 10, **dadurch gekennzeichnet, dass** der Abstand des Schwerpunkts des Massenkörpers (22) von der Rotationsachse einstellbar ist.

12. Vorrichtung nach Anspruch 11, **dadurch gekennzeichnet, dass** die Regelung einen Sollwert zu dem Abstand des Massenkörpers von der Rotationsachse ermittelt und ein weiterer Antrieb den Abstand entsprechend dem Sollwert einstellt.

13. Satz von Vorrichtungen nach einem der Ansprüche 1 bis 12, **dadurch gekennzeichnet, dass** die Vorrichtung parallel zueinander angeordnete Rotationsachsen aufweisen.

14. Satz von Vorrichtungen nach Anspruch 13, **dadurch gekennzeichnet, dass** die Rotationsbewegung der Massenkörper gleichphasig und gegensinnig erfolgt.

15. Satz von Vorrichtungen nach Anspruch 13 oder 14, **dadurch gekennzeichnet, dass** die Rotationsachsen zusammenfallen.

16. Satz von Vorrichtungen nach einem der Ansprüche 13 bis 15, **dadurch gekennzeichnet, dass** die Rotationsachsen in vertikaler Richtung übereinander angeordnet sind.

17. Satz von Vorrichtungen nach einem der Ansprüche 13 bis 16, **dadurch gekennzeichnet, dass** die Vorrichtung einen gleich großen und entgegengesetzt orientierten Winkel im Raum mit der Horizontalen einschließen.

18. Satz von Vorrichtungen nach einem der Ansprüche 13 bis 17, **dadurch gekennzeichnet, dass** eine mechanische Kopplung zwischen den Massenkörpern oder deren Rotationswellen vorliegen, um deren Rotationsbewegungen eine feste Phasenlage zuzuordnen.

## Claims

1. A device for controlling the oscillations of a structure, comprising:
- a mass body (22) that is rotatably mounted about a rotary axis and its center of gravity is at a distance (r) from the rotary axis, **characterized in that** the device furthermore has the following features:
- a control (26) with a first sensor that, within a predetermined angular range of a rotational movement of the mass body (22) about the rotary axis, detects an actual value of an angular speed (co), and/or of an angular acceleration of the mass body (22), and with a second sensor that detects a characteristic quantity of an oscillation of the structure, wherein the control calculates a target value of the speed and/or acceleration of the mass body within the predetermined angular range from the detected values of the first and second sensor
- and a drive that drives the rotational movement of the mass body (22) within the predetermined angular range corresponding to the target value or target values, and fails to drive outside the angular range.

2. The device according to claim 1, **characterized in that** the mass body (22) is driven exclusively within the predetermined angular range of the rotational movement of the mass body (22).

3. The device according to claim 1 or 2, **characterized in that** the rotary axis (24) extends horizontally.

4. The device according to claim 1 or 2, **characterized in that** the rotary axis (24) encloses an angle α which is different from 0° relative to the horizontal.

5. The device according to one of claims 1 to 4, **characterized in that** the predetermined angular range of the mass body is an angular range in which the center of gravity of the mass body is elevated.

6. The device according to claim 5, **characterized in that** the predetermined angular range has an angular position in which the potential energy of the mass body is at a maximum.

7. The device according to one of claims 1 to 6, **characterized in that** the second sensor detects an ambient condition that triggers an oscillation of the structure.

8. The device according to one of claims 1 to 7, **characterized in that** the second sensor detects an oscillation of the structure (12).

9. The device according to one of claims 1 to 8, **characterized in that** the rotary axis can be adjusted within its position in space.

10. The device according to claim 9, **characterized in that** the control detects a setpoint for the position of the rotary axis within space, and an additional drive adjusts the position of the rotary axis corresponding to the setpoint.

11. The device according to one of claims 1 to 10, **characterized in that** the distance is adjustable between the center of gravity of the mass body (22) and the rotary axis.

12. The device according to claim 11, **characterized in that** the control detects a setpoint for the distance between the mass body and the rotary axis, and another drive adjusts the distance according to the setpoint.

13. A set of devices according to one of claims 1 to 12, **characterized in that** the devices have rotary axes which are arranged parallel to each other.

14. The set of devices according to claim 13, **characterized in that** the the rotational movement of the mass bodies is in phase and opposite.

15. The set of devices according to claim 13 or 14, **characterized in that** the rotary axes coincide.

16. The set of devices according to one of claims 13 to 15, **characterized in that** the rotary axes are arranged superimposed on each other in a vertical direction.

17. The set of devices according to one of claims 13 to 16, **characterized in that** the devices enclose an angle with the horizontal equal in size and oppositely oriented in space.

18. The set of devices according to one of claims 13 to 17, **characterized in that** a mechanical coupling exists between the mass bodies or their rotary shafts in order to assign a fixed phasing to their rotational movements.

## Revendications

1. Dispositif pour le contrôle des vibrations dans une construction, comprenant :
- un corps de masse (22) monté de façon rotative autour d'un axe de rotation, et dont le centre de gravité est en décalage (r) par rapport à l'axe de rotation, **caractérisé en ce que** le dispositif présente en outre les caractéristiques suivantes :
- une commande (26) comprenant un premier capteur détectant une valeur réelle pour une vitesse angulaire (w) et/ou pour une accélération du corps de masse (22) dans une plage angulaire prédéterminée d'un mouvement de rotation du corps de masse (22) autour de l'axe de rotation, ainsi qu'un deuxième capteur détectant une grandeur caractéristique pour une vibration de la construction, le réglage à partir des valeurs détectées par le premier et le deuxième capteur permettant d'obtenir une valeur de consigne pour la vitesse et/ou l'accélération du corps de masse dans la plage angulaire prédéterminée,
- et un entraînement chargé d'entraîner le mouvement de rotation du corps de masse (22) en fonction de la valeur ou des valeurs de consigne de la commande dans la plage angulaire prédéterminée, et inactif en dehors de la plage angulaire.

2. Dispositif selon la revendication 1, **caractérisé en ce qu'**un entraînement du corps de masse (22) a lieu exclusivement dans la plage angulaire prédéterminée du mouvement de rotation du corps de masse (22).

3. Dispositif selon la revendication 1 ou 2, **caractérisé en ce que** l'axe de rotation (24) s'étend horizontalement.

4. Dispositif selon la revendication 1 ou 2, **caractérisé en ce que** l'axe de rotation (24) forme un angle α différent de 0° par rapport à l'horizontale.

5. Dispositif selon l'une des revendications 1 à 4, **caractérisé en ce que** la plage angulaire prédéterminée du corps de masse est une plage angulaire dans laquelle le centre de gravité du corps de masse est relevé.

6. Dispositif selon la revendication 5, **caractérisé en ce que** la plage angulaire prédéterminée présente une position angulaire dans laquelle l'énergie potentielle du corps de masse est maximale.

7. Dispositif selon l'une des revendications 1 à 6, **caractérisé en ce que** le deuxième capteur détecte une condition ambiante responsable du déclenchement d'une vibration dans la construction.

8. Dispositif selon l'une des revendications 1 à 7, **caractérisé en ce que** le deuxième capteur détecte une vibration dans la construction (12).

9. Dispositif selon l'une des revendications 1 à 8, **caractérisé en ce que** l'axe de rotation peut être réglé quant à sa position spatiale.

10. Dispositif selon la revendication 9, **caractérisé en ce que** le réglage détermine une valeur de consigne pour la position spatiale de l'axe de rotation, et un autre entraînement règle la position de l'axe de rotation conformément à la valeur de consigne.

11. Dispositif selon l'une des revendications 1 à 10, **caractérisé en ce que** la distance entre le centre de gravité du corps de masse (22) et l'axe de rotation peut être réglée.

12. Dispositif selon la revendication 11, **caractérisé en ce que** le réglage détermine une valeur de consigne pour la distance entre le corps de masse et l'axe de rotation, et un autre entraînement règle la distance conformément à la valeur de consigne.

13. Ensemble de dispositifs selon l'une des revendications 1 à 12, **caractérisé en ce que** les dispositifs présentent des axes de rotation agencés parallèlement les uns aux autres.

14. Ensemble de dispositifs selon la revendication 13, **caractérisé en ce que** le mouvement de rotation des corps de masse s'effectue avec la même phase et en sens inverse.

15. Ensemble de dispositifs selon la revendication 13 ou 14, **caractérisé en ce que** les axes de rotation se confondent.

16. Ensemble de dispositifs selon l'une des revendications 13 à 15, **caractérisé en ce que** les axes de rotation sont disposés l'un au-dessus de l'autre dans la direction verticale.

17. Ensemble de dispositifs selon l'une des revendications 13 à 16, **caractérisé en ce que** les dispositifs forment un angle identique et orienté de façon opposée dans l'espace par rapport à l'horizontale.

18. Ensemble de dispositifs selon l'une des revendications 13 à 17, **caractérisé en ce qu'**il est prévu un accouplement mécanique entre les corps de masse ou les arbres de rotation de ceux-ci, afin d'attribuer une position de phase fixe à leurs mouvements de rotation.
